Europäisches Patentamt

European Patent Office

Office européen des brevets

(19)

(11) **EP 0 911 991 B1**

(12) **FASCICULE DE BREVET EUROPEEN**

(45) Date de publication et mention
de la délivrance du brevet:
**22.12.2004 Bulletin 2004/52**

(51) Int Cl.⁷: **H04B 1/707**

(21) Numéro de dépôt: **98402605.4**

(22) Date de dépôt: **20.10.1998**

(54) **Procédé de traitement d'un signal de transmission d'information par étalement de spectre et récepteur correspondant**

Verfahren zur Spreizspektrumsignalübertragungsverarbeitung und entsprechender Empfänger

Method of spread spectrum transmission signal processing and corresponding receiver

(84) Etats contractants désignés:
**DE GB IT**

(30) Priorité: **22.10.1997 FR 9713237**

(43) Date de publication de la demande:
**28.04.1999 Bulletin 1999/17**

(73) Titulaire: **COMMISSARIAT A L'ENERGIE
ATOMIQUE
75015 Paris (FR)**

(72) Inventeurs:
• **Lattard, Didier
38680 Rencurel (FR)**
• **Boulanger, Christophe
94200 Ivry-sur-Seine (FR)**
• **Varreau, Didier
38450 Saint-Georges-de-Commiers (FR)**
• **Bouvier des Noes, Mathieu
92200 Neuilly-sur-Seine (FR)**

(74) Mandataire: **Poulin, Gérard et al
Société BREVATOME
3, rue du Docteur Lancereaux
75008 Paris (FR)**

(56) Documents cités:
**EP-A- 0 491 668       EP-A- 0 701 343
EP-A- 0 711 044**

# Description

## Domaine technique

La présente invention a pour objet un procédé de traitement d'un signal de transmission d'information par étalement de spectre et un récepteur correspondant.

## Etat de la technique

La technique de modulation à étalement de spectre par séquence directe est utilisée depuis de nombreuses années, en particulier dans les radiocommunications avec les satellites et dans le domaine militaire.

Dans un émetteur de données numériques utilisant une technique de modulation classique, les données à émettre modulent une porteuse radio. La modulation employée peut être une modulation de phase, de fréquence ou d'amplitude ou une modulation mixte. Pour simplifier l'exposé, on se limitera aux modulations de phase, qui sont aujourd'hui les plus utilisées.

Les données numériques à transmettre sont des éléments binaires, ou bits. Ces bits ont une période $T_b$, c'est-à-dire que tous les $T_b$ il faut transmettre un nouveau bit. Avec ces bits, on peut constituer des groupes de bits, appelés encore symboles, dont la période est notée $T_s$ et est un multiple de $T_b$. Ce sont ces symboles qui vont moduler la porteuse radio, par exemple en phase.

Deux exemples de modulation de phase peuvent illustrer cette technique :

  a) la modulation dite BPSK (pour "Binary Phase Shift Keying") ; elle consiste à affecter un état de phase, par exemple 0, aux bits 0, et un état de phase $\pi$ aux bits 1 ; dans ce cas, le symbole est le bit lui-même ($T_s=T_b$) et la porteuse radio voit son état de phase imposé tous les bits ;
  b) la modulation dite QPSK (pour "Quaternary Phase Shift Keying") ; elle consiste à utiliser des symboles formés par deux bits successifs ; ces symboles peuvent donc prendre quatre états (00, 01, 10, 11) ; on affecte un état de la phase de la porteuse à chacun de ces états ; dans ce cas, $T_s=2T_b$ et la porteuse radio voit son état de phase imposé tous les deux bits.

Côté réception, il faut démoduler le signal reçu. On distingue deux grandes familles de démodulation : la démodulation cohérente et la démodulation non cohérente. La technique de démodulation cohérente consiste à réaliser, dans le récepteur, un sous-ensemble dont le rôle est d'estimer la phase moyenne de la porteuse, de manière à reconstituer une référence de phase. Cette référence de phase est ensuite mélangée avec le signal reçu pour démoduler les données.

La technique de démodulation non cohérente est fondée sur l'observation selon laquelle il suffit que la référence de phase du symbole en cours soit comparée à la phase du symbole précédent. Dans ce cas, le récepteur n'estime pas la phase des symboles mais la différence de phase entre deux symboles successifs. On se trouve alors en présence d'une modulation différentielle de phase DPSK ("Differential Phase Shift Keying") ou DQPSK ("Differential Quadrature Phase Shift Keying").

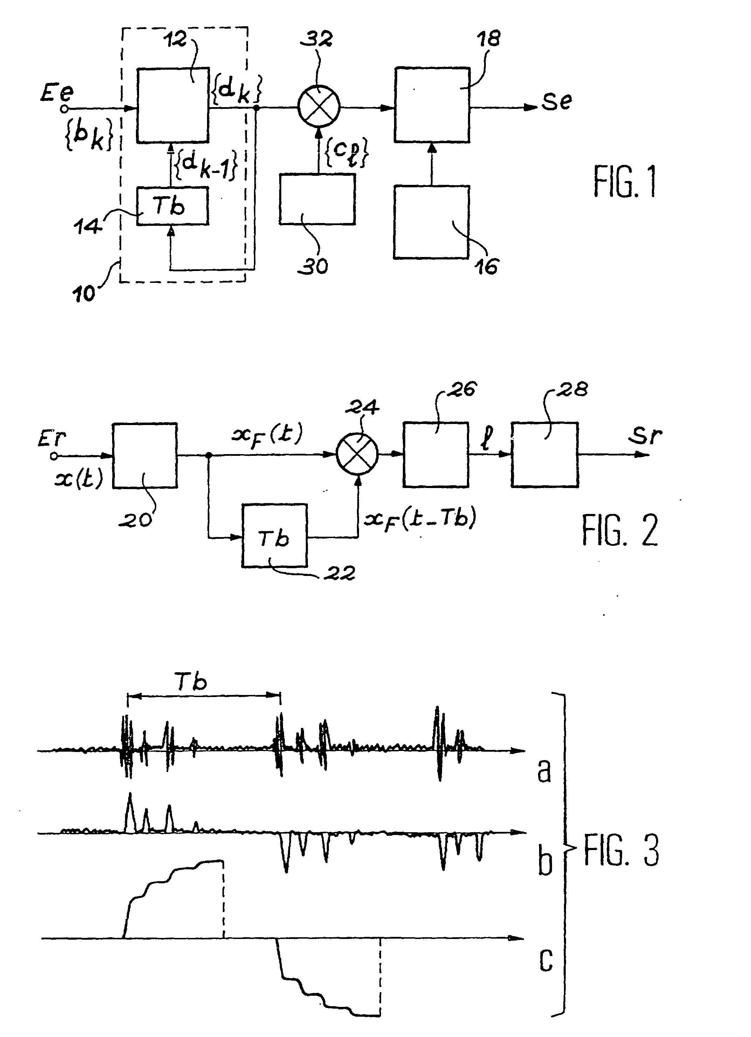

Les figures 1 à 3 annexées montrent schématiquement la structure et le fonctionnement d'un émetteur et d'un récepteur à étalement de spectre fonctionnant en DPSK. Cet état de la technique correspond au document FR-A-2 712 129.

La figure 1, tout d'abord, montre le schéma synoptique d'un émetteur. Cet émetteur possède une entrée Ee, qui reçoit les données $b_k$ à émettre et il comprend un codeur différentiel 10, composé d'un circuit logique 12 et d'un circuit à retard 14 ; l'émetteur comprend encore un générateur 30 de séquences pseudoaléatoires, un multiplieur 32, un oscillateur local 16 et un modulateur 18 relié à une sortie Se, qui délivre le signal DPSK.

Le circuit logique 12 reçoit les données binaires $b_k$ et délivre des données binaires $d_k$. Le circuit logique 12 reçoit également les données retardées d'un rang soit $d_{k-1}$. L'opération logique effectuée dans le circuit 12 est l'opération OU-exclusif sur les données $b_k$ et sur le complément de $d_k$ retardé (c'est-à-dire sur $\overline{d_{k-1}}$) :

$$d_k = b_k \oplus \overline{d_{k-1}}$$

La séquence pseudoaléatoire utilisée à l'émission pour moduler les données doit posséder une fonction d'autocorrélation présentant un pic marqué (de valeur N) pour un retard nul et des lobes secondaires le plus faible possible. Ceci peut être obtenu en utilisant des séquences de longueur maximale (appelées aussi m-séquences) ou des séquences dites de GOLD ou de KASAMI par exemple. Cette séquence pseudoaléatoire, notée $\{C\ell\}$, possède un débit binaire N fois plus élevé que le débit des données binaires à transmettre. La durée $T_C$ d'un élément binaire de cette séquence pseudoaléatoire, élément appelé aussi "chip", est donc égale à $T_b/N$.

Le débit en "chips" de la séquence pseudoaléatoire peut être de plusieurs millions, voire de plusieurs dizaines de millions par seconde.

La figure 2 annexée montre le schéma synoptique d'un récepteur correspondant, du type démodulateur différentiel. Ce récepteur possède une entrée Er et comprend un filtre adapté 20, dont la réponse impulsionnelle est la renversée dans le temps de la séquence pseudoaléatoire utilisée dans l'émetteur, un circuit à retard d'une durée $T_b$ référencé 22, un multiplieur 24, un intégrateur 26 sur une période $T_b$ et un circuit logique de décision 28. Le récepteur possède une sortie Sr qui restitue les données.

Si l'on note x(t) le signal appliqué à l'entrée Er, le multiplieur 24 reçoit le signal filtré $x_F(t)$ et le signal filtré-retardé $x_F(t-T_b)$. Le produit est intégré sur une période inférieure ou égale à $T_b$ dans l'intégrateur 26, lequel délivre un signal dont la polarité permet de déterminer la valeur du bit transmis.

Le filtre d'entrée 20 utilisé dans le récepteur possède une réponse impulsionnelle équivalente en bande de base, notée H(t), et cette réponse doit être le complexe conjugué renversé dans le temps de la séquence pseudoaléatoire c(t) utilisée à l'émission :

$$H(t)=c^*(T_b-t)$$

Le signal délivré par un tel filtre vaut donc :

$$x_F(t) = x(t) * H_F(t)$$

où le signe * désigne l'opération de convolution, soit

$$x_F(t) = \int_0^{T_b} x(s).c^*(s-t)ds.$$

Le filtre adapté 20 réalise donc la corrélation entre le signal appliqué à son entrée et la séquence pseudoaléatoire d'étalement.

Dans un canal à bruit additif gaussien, le signal $x_F(t)$ va donc se présenter sous la forme d'un signal impulsionnel, la fréquence de répétition des impulsions étant égale à $1/T_b$. L'enveloppe de ce signal est la fonction d'autocorrélation du signal c(t). L'information est véhiculée par la différence de phase entre deux pics de corrélation successifs.

La sortie du multiplieur va donc être formée d'une succession de pics positifs ou négatifs, suivant la valeur du bit transmis.

Dans le cas d'une transmission radio en présence de trajets multiples, la sortie du filtre adapté va être formée d'une succession de pics de corrélation, chaque pic correspondant à un trajet de propagation.

Les différents signaux de la chaîne de réception sont représentés sur la figure 3. La ligne (a) représente le signal filtré $x_F(t)$ ; la ligne (b) le signal de corrélation $x_F(t)*x_F(t-T_b)$ ; la ligne (c) le signal à la sortie de l'intégrateur.

La technique de modulation à étalement de spectre par séquence directe est largement décrite dans la littérature spécialisée. On peut citer, par exemple, les ouvrages suivants :

- "CDMA Principles of Spread Spectrum Communication", par Andrew J. VITERBI, Addison-Wesley Wireless Communications Series ;

- "Spread Spectrum Communications", par Marvin K. SIMON et al., vol. I, 1983, Computer Science Press ;
- "Spread Spectrum Systems", par R.C. DIXON, John WILEY and Sons.

Cette technique est également décrite dans certains articles :

- "Direct-sequence Spread Spectrum with DPSK Modulation and Diversity for Indoor Wireless Communications", publié par Mohsen KAVEHRAD et Bhaskar RAMAMURTHI dans la revue "IEEE Transactions on Communications", vol. COM 35, n°2, février 1987 ;
- "Practical Surface Acoustice Wave Devices", par Melvin G. HOLLAND, dans la revue Proceedings of the IEEE, vol. 62, n°5, mai 1974, pp. 582-611.

Les avantages de la technique à étalement de spectre par séquence directe sont multiples. On peut citer, notamment :

- la discrétion : cette discrétion est liée à l'étalement de l'information transmise sur une large bande de fréquence ; il en résulte une faible densité spectrale de la puissance émise ;
- l'accès multiple : plusieurs liaisons à étalement de spectre par séquence directe peuvent partager la même bande de fréquence en utilisant des séquences pseudoaléatoires d'étalement orthogonales (séquences possédant une fonction d'intercorrélation qui présente du bruit résiduel très faible pour tous les décalages) ; cette technique porte le nom d'accès multiple à répartition par les codes (AMRC en abrégé ou CDMA en anglais) ;
- une bonne cohabitation avec les communications à bande étroite classique : en effet, la même bande de fréquence peut être partagée par les systèmes utilisant une modulation à bande étroite et ceux qui utilisent une modulation à large bande ; les communications à bande étroite ne voient qu'une légère augmentation du bruit radioélectrique ambiant, d'autant plus faible que la longueur de la séquence sera grande ; les communications à modulation à étalement de spectre opèrent une réjection des modulations à bande étroite grâce à l'opération de corrélation effectuée à la réception ;
- la difficulté d'interception : une transmission à étalement de spectre par séquence directe est difficile à intercepter en raison de la faible densité spectrale et du fait que le récepteur doit connaître la séquence d'étalement pour pouvoir démoduler les données ;
- un excellent comportement dans un environnement multi-trajet : dans ce type d'environnement, la propagation de l'onde radioélectrique s'effectue selon des trajets multiples qui mettent en jeu des phénomènes de réflexion, de diffraction et de diffusion ; en outre, il n'est pas rare qu'il n'y ait plus de trajet direct stable dans le temps entre l'émetteur et le récepteur ; cette propagation par trajets multiples induit des effets parasites qui tendent à dégrader la qualité de la transmission.

La technique qui vient d'être décrite présente cependant un inconvénient qui est lié à la nécessité d'effectuer une estimation du canal, c'est-à-dire une détermination du nombre de trajets suivis par l'onde radioélectrique, avec les retards et les amplitudes correspondants et ceci pour chaque utilisateur. Cette estimation est souvent délicate, principalement lorsque le canal comprend des trajets multiples, qu'il y a plusieurs utilisateurs et qu'un certain niveau de bruit radioélectrique vient brouiller les signaux.

Par ailleurs, dans un récepteur à intégration comme celui qui vient d'être décrit, l'énergie véhiculée par les trajets multiples est sommée grâce à un accumulateur qui travaille sur une partie du symbole. Pour que de tels récepteurs fonctionnent de manière satisfaisante, il faut que la réponse impulsionnelle du canal (partie ou les pics apparaissent) soit plus petite que la durée d'un symbole (en général deux fois plus petite). Si cette règle n'est pas respectée, il devient difficile de séparer les symboles, et quand la réponse impulsionnelle est plus grande que le symbole, un phénomène de distorsion inter-symbole interdit une démodulation correcte des données. Le principe d'accumulation ne donne plus un bon niveau de performances.

La présente invention a justement pour but de remédier à ces inconvénients.

Le document EP-A1-0 701 343 décrit un procédé d'estimation de canal comprenant les opérations suivantes:

on effectue une corrélation entre le signal à traiter et la séquence directe utilisée, ce qui fournit plusieurs pics de corrélation d'amplitudes différentes, on détermine le pic de corrélation de plus forte amplitude on retranche du signal à traiter la part correspondant au pic de corrélation de plus forte amplitude.

Ce procédé vise à fournir une estimation du canal améliorée.

**Exposé de l'invention**

A cette fin, l'invention propose un procédé qui n'opère plus selon le principe de l'intégration du signal mais qui traite les pics de corrélation les uns après les autres, par ordre d'amplitude décroissante. Pour cela, le procédé de l'invention consiste à déterminer le pic de corrélation de plus forte amplitude, à soustraire l'information correspondant à ce pic du signal à traiter, et à traiter le nouveau signal de la même manière et ainsi de suite jusqu'à épuisement des pics. A partir des informations successives obtenues par les différents passes de cette itération, on restitue l'information transmise.

En d'autres termes, au lieu de considérer les différents pics de corrélation de manière globale en les intégrant, on les analyse individuellement, l'un après l'autre.

De façon plus précise, la présente invention a pour objet un procédé de traitement d'un signal correspondant à une transmission d'information par étalement de spectre par séquence directe à travers un canal à trajets multiples, ce procédé étant caractérisé par le fait qu'il comprend les opérations suivantes :

a) on effectue une corrélation entre le signal à traiter et la séquence directe utilisée, ce qui fournit plusieurs pics de corrélation d'amplitudes différentes, b) on détermine le pic de corrélation de plus forte amplitude et on restitue l'information correspondante, c) on ré-étale le spectre de l'information correspondant au pic de plus grande amplitude en utilisant la même séquence directe, d) on retranche du signal à traiter la part correspondant à ladite information ré-étalée et l'on obtient un nouveau signal, e) on réitère les opérations a, b, c et d pour ce nouveau signal et ainsi de suite jusqu'à épuisement des pics, f) à partir des différentes informations obtenues successivement pour les différents pics de corrélation on restitue l'information transmise.

La présente invention a également pour objet un récepteur à étalement de spectre par séquence directe pour le traitement successif des pics de corrélation correspondants à différents trajets de transmission, pour la mise en oeuvre du procédé qui vient d'être défini. Ce récepteur comprend au moins deux circuits en cascade comprenant chacun :

- un sommateur apte à recevoir un signal d'entrée,
- des moyens pour effectuer une corrélation entre une séquence pseudo-aléatoire et le signal d'entrée, ces moyens délivrant plusieurs pics de corrélation,
- des moyens pour déterminer le pic de plus forte amplitude et pour restituer l'information correspondante,
- des moyens pour ré-étaler l'information obtenue correspondant au pic de plus grande amplitude, et obtenir un signal de sortie de polarité appropriée,
- des moyens pour retarder le signal d'entrée d'une durée égale à la durée de formation dudit signal de sortie,

ledit signal de sortie et ledit signal retardé d'un des circuits constituant le signal d'entrée du circuit suivant.

## Brève description des dessins

- la figure 1, déjà décrite, est un schéma synoptique d'un émetteur connu à étalement de spectre ;
- la figure 2, déjà décrite, est un schéma synoptique d'un récepteur connu à étalement de spectre ;
- la figure 3, déjà décrite, illustre le fonctionnement général d'un récepteur tel que celui de la figure 2 ;
- la figure 4 montre le schéma général d'un récepteur selon l'invention ;
- la figure 5 illustre un mode particulier de réalisation d'un des circuits composant le récepteur de l'invention ;
- la figure 6 montre l'allure d'un signal "Dot" dans le premier étage d'un récepteur ;
- la figure 7 montre l'allure du signal "Dot" dans le deuxième étage du récepteur, après élimination du pic de plus grande amplitude ;
- la figure 8 montre l'allure du signal "Dot" dans le troisième étage, après élimination des deux pics de plus grande amplitude.

## Exposé détaillé de modes de réalisation

Avant de décrire certains modes particuliers de réalisation de l'invention, il est utile de faire quelques rappels sur la nature des signaux traités dans les récepteurs à étalement de spectre.

On considère une porteuse de pulsation w, modulée en phase par une fonction du temps P(t). Le signal modulé peut s'écrire :

$$s(t) = A(t)\cos[wt + P(t)]$$

où A(t) est l'amplitude du signal.

Cette expression peut se développer en :

$$s(t) = A(t) \cos wt \cos P(t) - A(t) \sin wt \sin P(t)$$

En notant I(t) la partie A(t)cosP(t), qui est en phase avec la porteuse et Q(t) la partie A(t)sinP(t), qui est en quadrature avec la porteuse, on peut encore écrire ce dernier signal sous la forme :

$$s(t) = I(t) \cos wt - Q(t) \sin wt$$

Il est commode alors de considérer le signal complexe S(t) :

$$S(t) = U(t)\exp(jwt)$$

avec U(t)=I(t)+jQ(t). Le signal vrai s(t) correspond alors à la partie réelle du signal complexe S(t).

Le traitement du signal s(t) peut donc s'effectuer par le double traitement des parties I(t) et Q(t) qu'on notera plus simplement, par la suite, I et Q.

Les processeurs qui traitent de tels signaux reçoivent en général, sur deux entrées distinctes, les signaux I et Q. Ces signaux sont obtenus en multipliant le signal de réception par une onde soit en phase avec la porteuse soit en quadrature avec celle-ci. Les processeurs effectuent ensuite divers traitements selon les modulations exploitées. On trouve ainsi, dans le cas de la modulation différentielle de phase, des traitements qui consistent à former la somme ou la différence de produits d'échantillons retardés ou non, comme par exemple $(I_k I_{k-1} + Q_k Q_{k-1})$ et $(Q_k I_{k-1} - I_k Q_{k-1})$ où k désigne le rang d'un échantillon.

La première expression est dite "Dot" et la seconde "Cross" dans la littérature sur ce sujet. Ces appellations viennent de ce que le premier signal est du type "produit intérieur" ou "produit scalaire" entre deux grandeurs, traditionnellement noté par un point ("Dot" en anglais), tandis que le second est du type "produit extérieur" ou "produit vectoriel" traditionnellement noté par une croix ("Cross").

On peut montrer que le produit d'un échantillon de rang k du signal s(t), soit s(k), par l'échantillon antérieur conjugué, soit s*(k-1), produit qui est calculé dans le récepteur pour démoduler le signal (cf multiplieur 24 sur la figure 2), est, à une rotation de phase fixe près, de la forme :

$$Dot(k) + jCross(k).$$

Le signal Dot permet la détermination du déphasage entre deux symboles successifs, alors que les signaux Dot et Cross, considérés ensemble, permettent de déterminer le nombre entier de fois π/2 du déphasage entre symboles successifs. Ces signaux Dot et Cross permettent donc la démodulation correcte et sans ambiguïté lorsqu'une modulation différentielle de phase a été utilisée à l'émission.

Un récepteur de signaux à étalement de spectre forme donc, d'abord, les parties en phase et en quadrature I et Q et effectue ensuite un filtrage adapté sur chacun de ces signaux. A partir des échantillons obtenus, le récepteur calcule les signaux Dot et Cross et, à partir de là, restitue l'information véhiculée par le signal reçu.

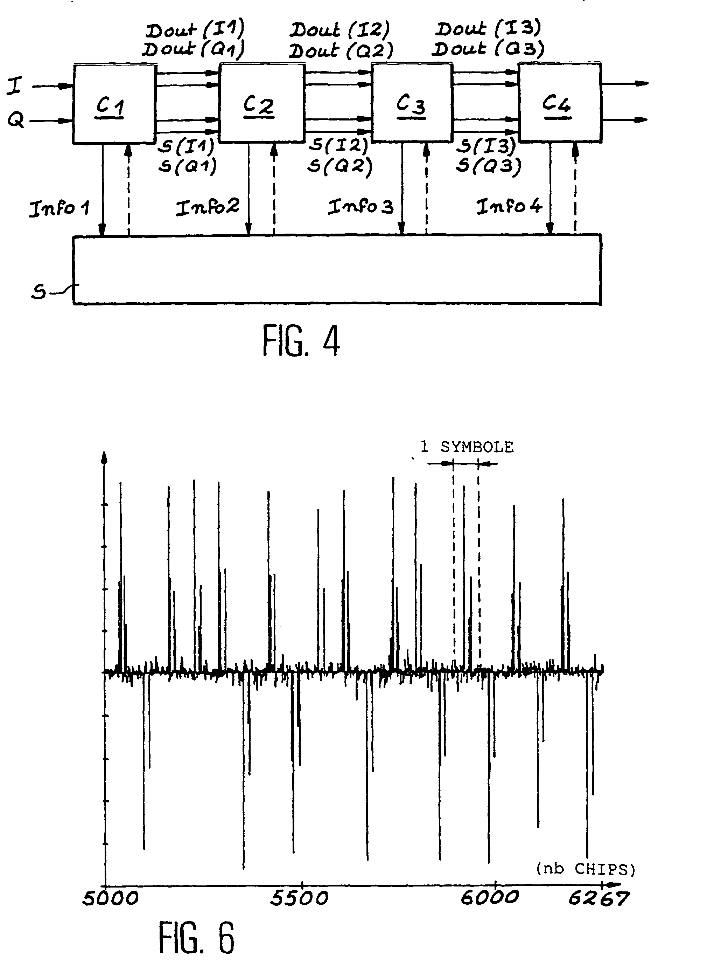

Le document FR-A-2 742 014 décrit un récepteur mettant en oeuvre cette technique. Sur la figure 4 de ce document est représenté un récepteur comprenant deux voies similaires, l'une traitant la partie I en phase et l'autre la partie Q en quadrature. La première voie de traitement numérique de la partie I en phase avec la porteuse, comprend :

    i) des premiers moyens numériques 50(I) aptes à remplir une première fonction de filtrage adapté à la séquence pseudoaléatoire utilisée à l'émission,
ii) des premiers moyens numériques 60(I) aptes à remplir une première fonction de retard.

Le circuit comprend encore une seconde voie de traitement numérique recevant la seconde partie Q du signal reçu, cette seconde partie étant en quadrature de phase avec la porteuse. Cette seconde voie comprend, comme la première :

i) des seconds moyens numériques 50(Q) aptes à remplir une seconde fonction de filtrage adapté à ladite séquence pseudoaléatoire,
ii) des seconds moyens numériques 60(Q) aptes à remplir une fonction de retard.

Le circuit décrit dans ce document comprend encore un circuit de multiplication 70 possédant :

- deux premières entrées, l'une reliée à la sortie des premiers moyens numériques 50(I) de filtrage et recevant un premier signal filtré $I_k$ et l'autre reliée à la sortie des premiers moyens aptes à remplir la fonction de retard 60(I) et recevant un premier signal filtré-retardé $I_{k-1}$,
- deux secondes entrées, l'une reliée à la sortie des seconds moyens numériques 50(Q) de filtrage et recevant un second signal filtré $Q_k$ et l'autre reliée à la sortie des seconds moyens aptes à remplir la fonction retard 60(Q) et recevant un second signal filtré-retardé $Q_{k-1}$,
- des moyens pour calculer les deux produits directs entre signaux filtrés et filtrés-retardés de la première et de la seconde voies à savoir $I_k I_{k-1}$ et $Q_k Q_{k-1}$, et les deux produits croisés entre signal filtré d'une voie et signal filtré-retardé de l'autre voie, à savoir $Q_k I_{k-1}$, et $I_k Q_{k-1}$,
- des moyens pour calculer la somme des produits directs, soit $I_k I_{k-1}+Q_k Q_{k-1}$ et la différence des produits croisés, soit $Q_k I_{k-1}-I_k Q_{k-1}$.

Le circuit décrit dans ce document comprend encore un circuit d'intégration et de régénération d'horloge 80 recevant la somme des produits directs et la différence des produits croisés. Ce circuit comprend encore un moyen numérique de programmation 90 contenant des informations aptes à programmer notamment les premiers et seconds moyens de filtrage 50(I), 50(Q).
Les deux voies comprennent en outre un premier et un second circuits de mise en forme et de sommation 95(I), 95(Q) disposés devant, respectivement, les premiers et seconds moyens de filtrage 50(I), 50(Q).
Ces considérations sur le traitement effectué dans un récepteur ayant été rappelées, on peut décrire le schéma général d'un récepteur conforme à l'invention. Tel que représenté sur la figure 4 annexée, ce récepteur comprend une cascade de circuits, quatre en l'occurrence C1, C2, C3, C4 (le nombre 4 n'étant évidemment pas limitatif) et un circuit superviseur S. Le premier circuit C1 reçoit les données en bande de base, c'est-à-dire la partie I en phase et la partie Q en quadrature de phase. Le premier circuit C1 délivre des données en bande de base S(I1) et S(Q1) qui correspondent au pic de plus forte amplitude et les données initiales Dout ($I_1$) et Dout($Q_1$) retardées du temps nécessaire à la formation de S(I1) et S(Q1). Le circuit suivant C2 reçoit ces deux types de signaux, soustrait de Dout(I1) la part S(I1) et de Dout(Q1) la part S(Q1) et effectue, sur les signaux résultants, le même traitement que le circuit C1. Le circuit C2 délivre alors des données en bande de base S(I2) et S(Q2) et des données retardées Dout(I2), Dout(Q2), lesquelles sont dirigées sur le circuit C3 et ainsi de suite.
Le signal d'entrée, avec sa pluralité de composantes correspondant à la pluralité de trajets empruntés par l'onde radioélectrique entre l'émetteur et le récepteur se trouve ainsi débarrassé progressivement de ses composantes, lesquelles sont extraites à chaque étage.
Le superviseur S reçoit de chaque circuit C1, C2, C3, C4 les informations Info1, Info2, Info3, Info4 correspondantes et synchronise les opérations de l'ensemble.

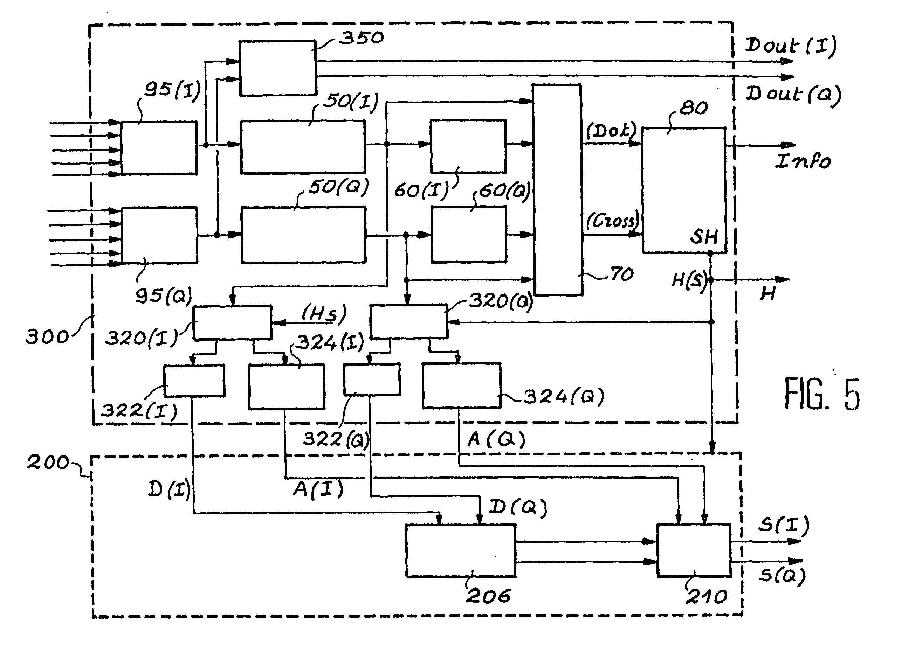

La figure 5 illustre un mode particulier de réalisation de l'un quelconque des circuits C1, C2, C3, C4. Ce circuit, référencé C, comprend des moyens connus et déjà évoqués plus haut et qui portent pour cette raison les mêmes références, à savoir deux additionneurs 95 (I), 95(Q), deux filtres adaptés à la séquence pseudo-aléatoire de l'utilisateur 50(I), 50(Q), deux moyens de retard d'une période symbole Ts, soit 60(I), 60(Q), un démodulateur 70 recevant, les signaux filtrés $I_k$ et $Q_k$ et les signaux filtrés-retardés $I_{k-1}$ et $Q_{k-1}$ et délivrant les signaux Dot et Cross définis plus haut.
Le circuit comprend encore un bloc 80 qui, à partir des signaux Dot et Cross, délivre une horloge-symbole Hs et l'information concernant la valeur du symbole.
Le circuit comprend en outre :

- un premier registre 320(I) relié à la sortie des premiers moyens de filtrage adapté 50(I) de la première voie I et commandé par le signal d'horloge-symbole Hs délivré par un circuit de régénération d'horloge (80), ce premier registre possédant une sortie,
- un second registre 320(Q) relié à la sortie des premiers moyens de filtrage adapté 50(Q) de la seconde voie et commandé par le signal d'horloge-symbole Hs délivré par le circuit de régénération d'horloge 80, ce second registre possédant une sortie,
- un premier détecteur de signe 322(I) relié à la sortie du premier registre 320(I) et délivrant une première donnée D(I) propre à la première voie,
- un second détecteur de signe 322(Q) relié à la sortie du second registre 320(Q) et délivrant une seconde donnée D(Q) propre à la seconde voie,

- un premier circuit 324(I) de détermination de la valeur absolue A(I) du signal délivré par la sortie du premier registre 320(I),
- un second circuit 324(Q) de détermination de la valeur absolue (A(Q)) du signal délivré par la sortie du second registre 320(Q),
- un circuit 200 comprenant un circuit d'étalement 206 commandé par les signaux D(I) et D(Q) et un circuit d'amplification à gain variable 210 qui reçoit les signaux de commande A(I) et A(Q) et qui délivre S(I) et S(Q).
- un moyen de retard 350 qui peut être une mémoire FIFO ("First-In-First-Out"), qui reçoit les signaux d'entrée I et Q et les retarde d'une durée égale au temps mis par le circuit pour constituer les données S(I), S(Q).

Le circuit C délivre finalement des premiers signaux Dout(I), Dout(Q) constituant le signal d'entrée retardé et des seconds signaux S(I), S(Q) constituant les parts à soustraire des premiers. Cette soustraction s'effectue automatiquement dans les additionneurs d'entrée du circuit suivant si la polarité des signaux S(I), S (Q) est appropriée.

Les figures 6 à 8 illustrent les résultats obtenus avec un récepteur à trois étages.

La figure 6, tout d'abord, montre l'allure du signal Dot dans le premier étage (c'est-à-dire à la sortie du circuit 70). On voit que, dans chaque période de symbole, il existe un pic (positif ou négatif selon la valeur de la donnée binaire) de forte amplitude, suivi de pics de plus faible amplitude.

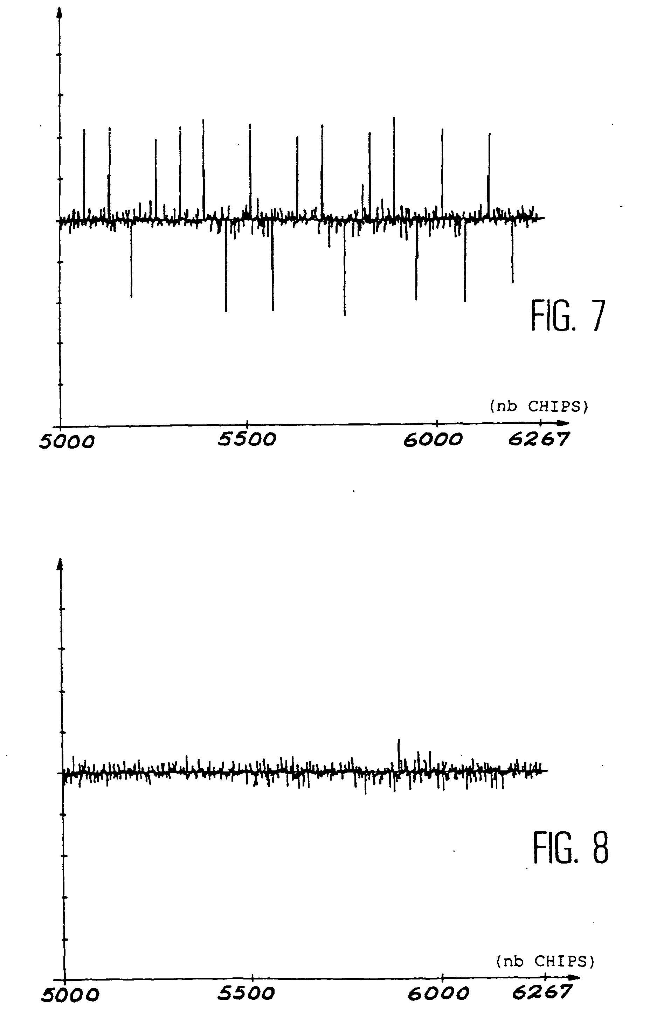

La figure 7 montre le signal Dot extrait du deuxième étage. On voit que le premier pic a disparu et que seul subsiste le deuxième, avec du bruit.

La figure 8 montre le signal Dot dans le troisième étage : les pics de corrélation ont disparu et il ne subsiste que du bruit. Il s'agit donc, dans ce cas de figure, d'un canal à deux trajets.

**Revendications**

1.  Procédé de traitement d'un signal correspondant à une transmission d'information par étalement de spectre par séquence directe à travers un canal à trajets multiples, ce procédé étant **caractérisé par le fait qu'**il comprend les opérations suivantes :

    a)on effectue une corrélation entre le signal à traiter et la séquence directe utilisée, ce qui fournit plusieurs pics de corrélation d'amplitudes différentes,
    b)on détermine le pic de corrélation de plus forte amplitude et on restitue l'information correspondante,
    c)on ré-étale le spectre de l'information correspondant au pic de plus grande amplitude en utilisant la même séquence directe,
    d)on retranche du signal à traiter la part correspondant à ladite information ré-étalée et l'on obtient un nouveau signal,
    e)on réitère les opérations a, b, c et d pour ce nouveau signal et ainsi de suite jusqu'à épuisement des pics,
    f) à partir des différentes informations obtenues successivement pour les différents pics de corrélation on restitue l'information transmise.

2.  Récepteur différentiel à étalement de spectre par séquence directe pour la mise en oeuvre du procédé de la revendication 1, ce récepteur comprenant au moins deux circuits en cascade (C1, C2, C3, C4) comprenant chacun :

    - un sommateur apte à recevoir deux signaux,
    - des moyens (50(I), 50(Q), 60(I), 60(Q), (70)) pour effectuer une corrélation entre une séquence pseudo-aléatoire et les signaux reçus, ces moyens délivrant plusieurs pics de corrélation,
    - des moyens pour déterminer le pic de plus forte amplitude, et pour restituer l'information correspondante (Info)
    - des moyens (206,210) pour ré-étaler l'information obtenue (D(I), D(Q)) correspondant au pic de plus grande amplitude, et obtenir un signal de sortie (s(I), S(Q))
    - des moyens (350) pour retarder le signal d'entrée (Dout(I), Dout(Q) d'une durée égale à la durée de formation dudit signal de sortie (S(I), S(Q),

    ledit signal de sortie (S(I), S(Q) et ledit signal retardé (Dout(I), Dout(Q) d'un des circuits constituant les signaux d'entrée du circuit suivant.

3.  Récepteur selon la revendication 2, dans lequel chaque circuit comprend :

    a) une première voie de traitement d'une première partie (I) du signal reçu en phase avec la porteuse reçue, cette première voie comprenant :

    i) un premier sommateur (95(I)),
    ii) des premiers moyens (50(I)) de filtrage adapté correspondant à une séquence pseudo-aléatoire particulière, ces premiers moyens délivrant un premier signal filtré ($I_k$),
    iii)des premiers moyens (60(I)) de retard, délivrant un premier signal filtré-retardé ($I_{k-1}$),

    b) une seconde voie de traitement d'une seconde partie (Q) du signal en quadrature de phase avec la porteuse reçue, cette seconde voie comprenant :

i) un second sommateur (95(Q)),
ii) des seconds moyens (50(Q)) de filtrage adapté correspondant à ladite séquence pseudo-aléatoire particulière, ces seconds moyens délivrant un second signal filtré ($Q_k$),
iii) des seconds moyens 60(Q)) de retard, délivrant un second signal filtré-retardé ($Q_{k-1}$),

c) un circuit de démodulation (70) recevant les premiers signaux filtré et filtré-retardé ($I_k$, $I_{k-1}$) et les seconds signaux filtré et filtré-retardé ($Q_k$, $Q_{k-1}$), ce circuit (70) comprenant des moyens pour calculer un signal "Dot" égal à ($I_k I_{k-1} + Q_k Q_{k-1}$) et un signal "Cross" égal à ($Q_k I_{k-1} - I_k Q_{k-1}$).

**4.** Récepteur selon la revendication 3, dans lequel les moyens pour délivrer les signaux S(I) et S(Q) correspondant au pic de plus grande amplitude comprennent :

- un premier registre (320(I)) relié à la sortie des premiers moyens de filtrage adapté (50(I)) de la première voie et commandé par le signal d'horloge-symbole (Hs) délivré par un circuit de régénération d'horloge (80), ce premier registre possédant une sortie,
- un second registre (320(Q)) relié à la sortie des premiers moyens de filtrage adapté (50(Q)) de la seconde voie et commandé par le signal d'horloge-symbole (H)s délivré par le circuit de régénération d'horloge (80), ce second registre possédant une sortie,
- un premier détecteur de signe (322(I)) relié à la sortie du premier registre (320(I) et délivrant une première donnée (D(I) propre à la première voie,
- un second détecteur de signe (322(Q)) relié à la sortie du second registre (320(Q)) et délivrant une seconde donnée (D(Q) propre à la seconde voie,
- un premier circuit (324(I)) de détermination de la valeur absolue (A(I)) du signal délivré par la sortie du premier registre (320 (I),
- un second circuit (324(Q)) de détermination de la valeur absolue (A(I)) du signal délivré par la sortie du second registre (320(Q)),
- des moyens d'étalement de spectre par séquence pseudo-aléatoire (206), ces moyens étant reliés aux sorties des premier et second détecteurs de signe (322(I)) (322(Q)),
- un circuit d'amplification et d'inversion (210) des signaux délivrés par les moyens d'étalement de spectre (206), ce circuit d'amplification et d'inversion (210) possédant deux entrées de commande de gain reliées respectivement aux sorties des premier et second circuits de détermination de valeur absolue (324(I)) (324(Q)), ce circuit d'amplification et d'inversion (210) délivrant deux signaux (S(I)), S(Q)).

**Patentansprüche**

**1.** Verfahren zur Verarbeitung eines Signals entsprechend einer Direktsequenz-Spreizspektrum-Informationsübertragung durch einen Multipfexkanal, **dadurch gekennzeichnet, dass** es die folgenden Operationen umfasst:

a) man führt einer Korrelation zwischen dem zu verarbeitenden Signal und der benutzten Direktsequenz durch, was mehrere Korrelations-Peaks mit unterschiedlichen Amplituden liefert,
b) man bestimmt den Korrelations-Peak mit der größten Amplitude und rekonstruiert die entsprechende Information,
c) man spreizt das Spektrum der dem Peak mit der größten Amplitude entsprechenden Information wieder, wobei man dieselbe Direktsequenz benutzt,
d) man zieht von dem zu verarbeitenden Signal den der genannten wieder gespreizten Information entsprechenden Teil ab und erhält ein neues Signal,
e) man wiederholt die Operationen a, b, c und d für dieses neue Signal usw., bis die Peaks verbraucht sind,
f) aufgrund der verschiedenen sukzessive für die verschiedenen Peaks erhaltenen Informationen rekonstruiert man die übertragene Information.

**2.** Direktsequenz-Spreizspektrum-Differentialempfänger zur Anwendung des Verfahrens nach Anspruch 1, wobei dieser Empfänger wenigstens zwei Kaskadenschaltungen (C1, C2, C3, C4) enthält, von denen jede umfasst:

- einen Summierer, fähig zwei Signale zu empfangen,
- Einrichtungen (50(I), 50(Q), 60(I), 60(Q), (70)) zur Durchführung einer Korrelation zwischen einer Pseudozufallssequenz und den empfangenen Signalen, wobei diese Einrichtungen mehrere Korrelations-Peaks liefern,
- Einrichtungen zur Bestimmung des Peaks mit der größten Amplitude und zur Rekonstruktion der entsprechenden Information (Info),
- Einrichtungen (206, 210), um die erhaltene, dem Peak mit der größten Amplitude entsprechende Information (D(I), D(Q)) wieder zu spreizen und ein Ausgangssignal (S(I), S(Q)) zu erhalten,

- Einrichtungen (350), um das Eingangssignal (Dout(I), Dout(Q) um eine Dauer gleich der Dauer der Bildung des genannten Ausgangsignals (S(I), S(Q)) zu verzögern,

wobei das genannte Ausgangsignal (S(I), S(Q)) und das genannte verzögerte Signal (Dout(I), Dout(Q) von einer der Schaltungen die Eingangssignale der nachfolgenden Schaltung bilden.

3. Empfänger nach Anspruch 2, wobei jede Schaltung umfasst:

    a) einen ersten Verarbeitungskanal eines ersten Teils (I) des phasengleich mit dem empfangenen Träger empfangenen Signals, wobei dieser erste Kanal umfasst:

    i) einen ersten Summierer (95(I)),
    ii) erste angepasste, einer speziellen Pseudozufalls-Sequenz entsprechende Filtereinrichtungen (50(I)), wobei diese ersten Einrichtungen ein erstes gefiltertes Signal ($I_k$) liefern,
    iii) erste ein gefiltert-verzögertes Signal ($I_{k-1}$) liefernde Verzögerungseinrichtungen (60(I)),

    b) einen zweiten Verarbeitungskanal eines zweiten Teils (Q) des zu dem empfangenen Träger um 90° phasenverschobenen Signals, wobei dieser zweite Kanal umfasst:

    i) einen zweiten Summierer (96(Q)),
    ii) zweite angepasste, der genannten speziellen Pseudozufalls-Sequenz entsprechende Filtereinrichtungen (50(Q)), wobei diese zweiten Einrichtungen ein zweites gefiltertes Signal ($Q_k$) liefern,
    iii) zweite ein gefiltert-verzögertes Signal ($Q_{k-1}$) liefernde Verzögerungseinrichtungen (60(Q)),

    c) eine Demodulationsschaltung (70), welche die ersten gefilterten und gefiltert-verzögerten Signale ($I_k$, $I_{k-1}$) und die zweiten gefilterten und gefiltert-verzögerten Signale ($Q_k$, $Q_{k-1}$) empfängt, wobei diese Schaltung (70) Einrichtungen umfasst, um ein Signal "Dot" gleich ($I_k K_{k-1} + Q_k Q_{k-1}$) und ein Signal "Cross" gleich ($Q_k I_{k-1} + I_k Q_{k-1}$) zu berechnen.

4. Empfänger nach Anspruch 3, bei dem die Einrichtungen zum Liefern der Signale S(I) und S(Q), die dem Peak mit der größten Amplitude entsprechen, umfassen:

- ein erstes Register (320(I)), verbunden mit dem Ausgang der ersten angepassten Filtereinrichtungen (50(I)) des ersten Kanals und gesteuert durch das Symbol-Takt-Signal (Hs), geliefert durch eine Taktregenerationsschaltung (80), wobei dieses erste Register einen Ausgang besitzt,
- ein zweites Register (320(Q)), verbunden mit dem Ausgang der zweiten angepassten Filtereinrichtungen (50(Q)) des zweiten Kanals und gesteuert durch das Symbol-Takt-Signal (H)s, geliefert durch eine Taktregenerationsschaltung (80), wobei dieses zweite Register einen Ausgang besitzt,
- einen ersten Vorzeichendetektor (322(I)), verbunden mit dem Ausgang des ersten Registers (320(I)), der eine für den ersten Kanal typische erste Größe (D(I)) liefert,
- einen zweiten Vorzeichendetektor (322(Q)), verbunden mit dem Ausgang des zweiten Registers (320(Q)), der eine für den zweiten Kanal typische zweite Größe (D(Q)) liefert,
- eine erste Schaltung (324(I)) zur Bestimmung des Absolutwerts (A(I)) des durch den Ausgang des ersten Registers (320(I)) gelieferten Signals,
- eine zweite Schattung (324(Q)) zur Bestimmung des Absolutwerts (A(Q)) des durch den Ausgang des ersten Registers (320(Q)) gelieferten Signals,
- Pseudozufallsequenz-Spreizspektrumeinrichtungen (206), wobei diese Einrichtungen mit den Ausgängen des ersten (322(I)) und zweiten (322(Q)) Vorzeichendetektors verbunden sind,
- eine Verstärkungs- und Inversionsschaltung (210) der durch die Spreizspektrumeinrichtungen (206) gelieferten Signale, wobei diese Verstärkungs- und Inversionsschaltung (210) zwei Verstärkungssteuerungseingänge besitzt, jeweils verbunden mit den beiden Ausgängen der ersten und zweiten Absolutwertbestimmungseinrichtungen (324(I)) (324(Q)), und diese Verstärkungs- und Inuersionsschaltung (210) zwei Signale (S(I)), S(Q)) liefert.

**Claims**

1. Process for the processing of a signal corresponding to a direct sequence spread spectrum information transmission through a multiple path channel, said process being **characterized in that** it comprises the following operations:

a) a correlation is performed between the signal to be processed and the direct sequence used, which supplies several correlation peaks of different amplitudes,

b) the highest amplitude correlation peak is determined and the corresponding information restored,

c) the spectrum of the information corresponding to the highest amplitude peak is respread using the same direct sequence,

d) from the signal to be processed is subtracted the part corresponding to said respread information and a new signal is obtained,

e) operations a, b, c and d are reiterated for said new signal and so on until the peaks are exhausted,

f) on the basis of the different informations successively obtained for the different correlation peaks, the transmitted information is restored.

2. Direct sequence spread spectrum differential receiver for performing the process of claim 1, said receiver incorporating at least two circuits in cascade (C1, C2, C3, C4), each having:

- an adder able to receive two signals,
- means (50(I), 50(Q), 60(I), 60(Q), (70)) for performing a correlation between a pseudorandom sequence and the signals received, said means supplying several correlation peaks,
- means for determining the highest amplitude peak and for restoring the corresponding information (Info),
- means (206, 210) for respreading the information obtained (D(I), D(Q)) corresponding to the highest amplitude peak and for obtaining an output signal (S(I), S(Q)),
- means (350) for delaying the input signal (Dout(I), Dout(Q)) by a time equal to that for forming the output signal (S(I), S(Q)), said output signal (S(I), S(Q)) and said delayed signal (Dout(I), Dout(Q)) of one of the circuits constituting the input signals of the following circuit.

3. Receiver according to claim 2, wherein each circuit comprises:

a) a first channel for processing a first part (I) of the signal received in phase with the carrier received, said first channel having:

i) a first adder (95(I)),
ii) first matched filtering means (50(I)) corresponding to a particular pseudorandom sequence, said first means supplying a first filtered signal ($I_k$),
iii) first delay means (60(I)) supplying a first delayed, filtered signal ($I_{k-1}$),

b) a second channel for processing a second part (Q) of the signal in phase quadrature with the carrier received, said second channel having:

i) a second adder (95(Q)),
ii) second matched filtering means (50(Q)) corresponding to said particular pseudorandom sequence, said second means supplying a second filtered signal ($Q_k$),
iii) second delay means (60(Q)) supplying a second delayed, filtered signal ($Q_{k-1}$),

c) a demodulation circuit (70) receiving the first filtered and delayed, filtered signals ($I_k$, $I_{k-1}$) and the second filtered and delayed, filtered signals ($Q_k$, $Q_{k-1}$), said circuit (70) having means for calculating a Dot signal equal to ($I_kI_{k-1}+Q_kQ_{k-1}$) and a Cross signal equal to ($Q_kI_{k-1}-I_kQ_{k-1}$).

4. Receiver according to claim 3, wherein the means for supplying the signals S(I) and S(Q) corresponding to the highest amplitude peak comprise:

- a first register (320(I)) connected to the output of the first matched filtering means (50(I)) of the first channel and controlled by the clock symbol signal (Hs) supplied by a clock regeneration circuit (80), said first register having an output,
- a second register (320(Q)) connected to the output of the first matched filtering means (50 (Q)) of the second channel and controlled by the clock symbol signal (Hs) supplied by the clock regeneration circuit (80), said second register having an output,
- a first sign detector (322(I)) connected to the output of the first register (320(I) and supplying a first data item (D(I)) individual to the first channel,
- a second sign deterctor (322(Q)) connected to the output of the second register (320(Q)) and supplying a second data item (D(Q)) individual to the second channel,
- a first circuit (324(I)) for the determination of the absolute value (A(I)) of the signal supplied by the output of the first register (320(I)),
- a second circuit (324(Q)) for the determination of the absolute value (A(I)) of the signal supplied by the output of the second register (320 (Q)),
- pseudorandom sequence spread spectrum means (206) connected to the outputs of the first and second sign detectors (322(I)), (322 (Q)),
- a circuit (210) for the amplification and inversion of the signals supplied by the spread spectrum means (206), said amplification and inversion circuit (210) having two gain control inputs

**EP 0 911 991 B1**

respectively connected to the outputs of the first and second absolute value determination circuits (324(I)) (324(Q)), said amplification and inversion circuit (210) supplying two signals (S(I)), (S(Q)).

FIG. 1

FIG. 2

FIG. 3

Dout (I1)   Dout (I2)   Dout (I3)
Dout (Q1)   Dout (Q2)   Dout (Q3)

I →

Q →

$C_1$   $C_2$   $C_3$   $C_4$

S(I1)   S(I2)   S(I3)
S(Q1)   S(Q2)   S(Q3)

Info 1   Info 2   Info 3   Info 4

S

FIG. 4

1 SYMBOLE

(nb CHIPS)

5000    5500    6000   6267

FIG. 6

FIG. 5

EP 0 911 991 B1

FIG. 7

(nb CHIPS)

5000          5500          6000     6267

FIG. 8

(nb CHIPS)

5000          5500          6000     6267

15